# EUROPEAN PATENT APPLICATION

(11) **EP 2 566 125 A1**
(43) Date of publication of application: **06.03.2013**
(21) Application number: 11179336.0
(22) Date of filing: 30.08.2011
(51) Int. Cl.: H04L 29/06, H04L 9/32, H04L 29/08, G01D 4/00, G01R 22/06

(54) **System and method to securely report and monitor utility consumptions within a communication network**

(71) Applicant: Nagravision S.A., 1033 Cheseaux-sur-Lausanne (CH)
(72) Inventor: Wenger, Joel, 1163 Etoy (CH); Le Buhan, Corinne, 1619 Les Paccots (CH)
(74) Representative: Leman Consulting S.A.

(57) **Abstract**

Method to report and monitor utility consumptions within a communication network comprising a plurality of utility meters (U1-U8) connected to at least one utility management center (P1-P3) through at least one intermediate data concentrator (C1-C4). The method comprising the following steps:
within an initialization phase:
- registering said utility meter (U1-U8) to a preferred data concentrator,
- acquiring a public key certificate from said preferred data concentrator and verifying its authenticity; if it is not authentic, then carrying out a warning step, otherwise extracting a preferred data concentrator public key KpubPDC from said certificate, then establishing a random session key Ks, encrypting it with the preferred data concentrator public key into a key message MessKey, within an operating phase:
- generating a payload message MessPayload comprising at least metering data measurement DTup metered by the utility meter (U1-U8);
- transmitting said communication data, comprising a utility meter identifier Uid, a preferred data concentrator identifier DCidpref, the key message and the payload message, at least to said preferred data concentrator,
- receiving a transmitting acknowledgement message sent by the preferred data concentrator (C1-C4) to the utility meter (U1-U8) in case of completely successful transmission; if no transmitting acknowledgement message has been received within a predetermined time period from the transmitting step, then carrying out a disruption procedure.

## Description

### TECHNICAL FIELD

This invention concerns the field of utility meters that are monitored and managed from at least one utility management center through at least one intermediate data concentrator in a communication network.

### BACKGROUND

The on-going deregulation in worldwide energy distribution markets is driving the need for smart utility distribution grids and smart meters, enabling both utility providers and consumers to monitor the detailed consumption of an end user at any time through open communication networks. The energy market is particularly concerned as of today but related issues are also relevant to other utility markets such as water or gas.

While a number of legacy meters already implement some point-to-point Automated Metering Reading (AMR) protocols using for instance standard optical or modem interfaces, they are not able to interact with either the end user home area network devices or the remote utility monitoring facilities using wireless or power line communication networks. The industry answer to this regulatory requirement in the next decade will therefore consist in swapping the legacy meters for so-called smart meters.

Smart meters enable utility providers to monitor the detailed consumption of an end user at any time through open communication networks, as well as to remotely control the meter functionality, including the ability to remote disconnect it in certain markets. From the end user perspective, the resulting dependency of the meter consumption measurement and reporting on remote communication messages raises significant concerns on the effective robustness to software bugs as well as emerging threats such as smart grid worms and viruses taking advantage of smart meter security design flaws that may not be known at the time of deployment, but may become critical later. From the utility provider perspective, as there will be no more local measurement and physical control of the meter functionality by authorized personnel, the smart metering architecture needs careful design to ensure secure, tamper resistant and trusted data collection and transmission from the smart meters to the provider utility services facility.

In practice, the open networks connecting the utility meters to the utility providers may not be 100% reliable all the time. There is therefore a need for a metering reporting system and method that is robust to local communication interrupts.

### SUMMARY OF THE INVENTION

This problem is addressed by a method for managing utility meter communications between three main entities, namely a data concentrator proxy located between a utility meter and a utility provider. More particularly, the present invention refers to a method for reporting and monitoring utility consumptions within a communication network comprising a plurality of utility meters connected to at least one utility management center through at least one intermediate data concentrator, each utility meter being identified by a utility meter identifier Uid and being adapted firstly to produce communication data intended to a preferred data concentrator identified by a data concentrator identifier DCidpref and secondly to send these communication data into the communication network, the method comprising the following steps:
within an initialization phase:
   - registering said utility meter to said preferred data concentrator,
   - acquiring a public key certificate from said preferred data concentrator and verifying if said public key certificate is authentic,
   - if the public key certificate is not authentic then carrying out a warning step, otherwise extracting a preferred data concentrator public key KpubPDC from said public key certificate,
   - establishing a random session key Ks,
   - encrypting said random session key Ks with the preferred data concentrator public key KpubPDC into a key message MessKey,
within an operating phase:
   - generating a payload message MessPayload comprising at least metering data measurement DTup metered by the utility meter U1-U8;
   - transmitting communication data,, comprising the utility meter identifier Uid, the preferred data concentrator identifier DCidpref, the key message MessKey and the payload message MessPayload, at least to said preferred data concentrator,
   - receiving a transmitting acknowledgement message sent by the preferred data concentrator to the utility meter in case of completely successful transmission,
   - if no transmitting acknowledgement message has been received within a predetermined time period from the transmitting step, then carrying out a disruption procedure.

The present invention also refers to a system able to implement the above mentioned method.

The present invention further refers to the use of the above-mentioned method for detecting electricity theft. That can be performed, at the level of a data concentrator, by measuring the overall utility consumption (i.e. the sum of energy supplied to the end users) and comparing it with the sum of reported utility consumption measurements DTup from all utility meters (of said end users) registered to this data concentrator. Energy losses resulting from the ordinary efficiency of the supplying system must be taken into account in the calculation.

The present invention also refers to the use of the above-mentioned system for detecting electricity theft by the same process as that mentioned above.

In an alternate manner and while keeping the same steps as those of the above-mentioned method, the latter method could refer directly to a method for detecting electricity theft within a network comprising a plurality of utility meters connected to at least one utility management center through at least one intermediate data concentrator, each utility meters being identified by a utility meter identifier Uid and being adapted firstly to produce communication data intended to a preferred data concentrator identified by a data concentrator identifier DCidpref and secondly to send these communication data, said electricity theft detection being carried out by measuring the overall utility consumption at the level of a data concentrator and comparing it with the sum of reported utility consumption measurements DTup from all utility meters registered to said data concentrator, while taken into account ordinary energy loss.

### BRIEF DESCRIPTION OF THE DRAWINGS

The present invention will be better understood thanks to the attached figures in which:
Figure 1 shows a schematic illustration of a star-shaped network comprising end user utility meters, data concentrators and utility provider management centers.
Figure 2 shows a first alternative of the schematic illustration of figure 1.
Figure 3 depicts a second alternative of the schematic illustration given in the figure 1.

### DETAILED DESCRIPTION

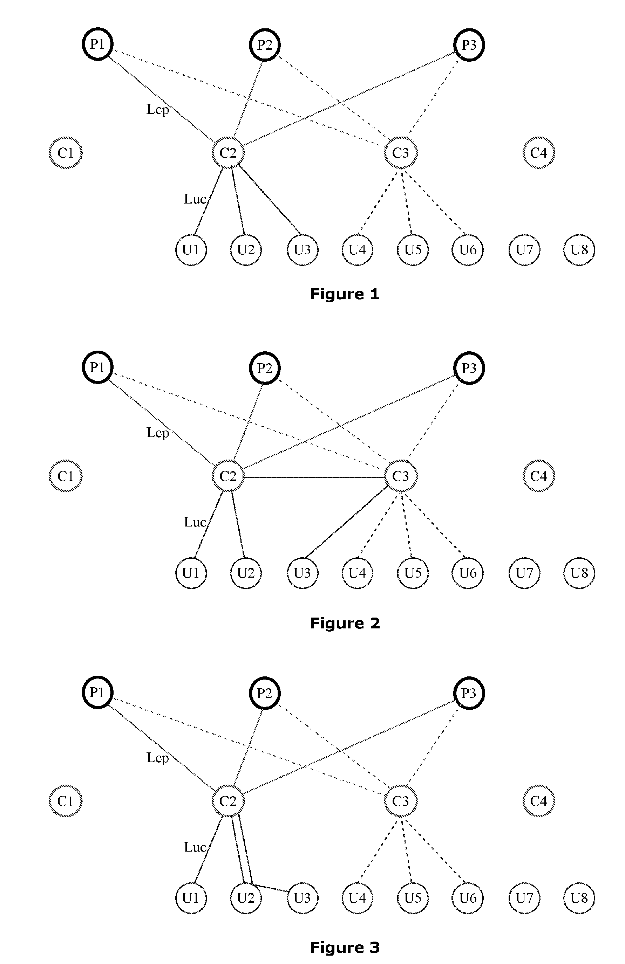

One possible smart grid network topology depicted in Figure 1 consists of a star-shaped network of subset of end user utility meters U1, U2, U3 directly connected to an intermediate data concentrator C2, connected itself to the utility provider management center P1. In a conventional star-shaped network, the data concentrator is typically co-located with the low-voltage utility distribution to a neighborhood, and is associated with a given utility provider and monitors up to several thousands of utility meters. In a deregulated utility market, the data concentrator C2 is independent from a specific utility provider network and can be further connected to multiple utility providers P1, P2, P3 who are offering competing utility delivery offerings to the end user. This architecture however requires a reliable point-to-point communication network between each monitored utility meter and the monitoring data concentrator, in order to prevent loss of consumption data reporting from the utility meter to the utility provider through the data concentrator.

In the proposed smart grid network topology alternative depicted in Figure 2, a mesh network comprises another data concentrator to which a utility meter U3 in the subset of end user utility meters U1, U2, U3 can switch from its regular data concentrator C2 in order to avoid the interruption of its metering operation when it can no longer connect to the regular data concentrator C2. The decision to switch to another data concentrator may be caused by local conditions such as network bandwidth, latency or signal strength, in particular in the case of a wireless connection between the utility meter U3 and the data concentrator C2. It may also be negotiated by the utility meter U3 with the data concentrators C2, C3 in order to optimally balance their respective processing and/or utility delivery loads.

A special case of the latter smart grid network topology, as depicted in Figure 3, comprises a local utility meter U2 acting as a data concentrator proxy to another utility meter U3. This configuration is useful for instance when the utility meter U3 is positioned in a building area not favorable to wireless signal transmissions, such as the lowest basement floor in a building, whereas the former meter U2 is positioned in a more favorable location such as the ground floor or even a dedicated box on an outside wall of the building. This topology requires additional capability by the utility meter U2 to process the extra data communication from the utility meter U3 as a proxy in addition to its own data and communication processing, so it is typically limited to the handling of a very few numbers of isolated utility meters such as U3, in contrast to a regular data concentrator that is usually able to handle up to a few thousands of individual utility meters connections. The utility meter U2, acting as a proxy between one or several local utility meters, can be considered as a special case of a simple data concentrator proxy in the following description.

Each utility management center P1, P2, P3 implements various utility management processes such as data management billing, load management and outage control, and queries and controls the data concentrators C1, C2, C3, C4 accordingly through the smart grid global communication network links Lpc.

Each data concentrator C1, C2, C3, C4 comprises functional components in charge with enforcing meter usage monitoring and reporting to the utility management center by means of secure communications with the individual meters through the local communication network links Luc on the one hand and with the utility providers management centers through the global smart grid network links Lcp on the other hand. Besides and in accordance with a preferred embodiment, each data concentrator is directly connected to at least one utility management center P1, P2, P3.

Each communication network link Lcp, Luc from Figure 1 is built over a utility metering communication physical network, such as, but not limited to, a cable network, the power line wire, a wireless network, or a combination thereof, and employs a communication networking protocol, such as, but not limited to, Internet Protocol (IP) v4 or v6. On top of those networks, communication messaging for smart grids and smart meters is largely inspired by the telecommunication industry and subject to emerging standardization by international committees such as ANSI or IEC.

In terms of security design, most smart grid standards require the establishment of a Public Key Infrastructure (PKI) where each node in the network is associated with a pair of public and private asymmetric cryptography keys, for instance a RSA key pair, and a chain of public key certificates signed by a trusted central authority, for instance X.509 certificates. In a simple communication system, in order to report its metering data measurement DTup (e.g. within a utility reporting message), the utility meter U1 generates a random payload key Kp, encrypts it with the public key KpubC2 of the data concentrator C2, and encrypts and signs the data measurement DTup by means of Kp. It transmits (Kp)KpubC2 and (DTup)Kp in one or several messages to the data concentrator C2, which decrypts the Kp value by means of its unique, secret private key KprivC2, and then the payload data DTup by means of the formerly decrypted Kp key. In a more optimized bidirectional communication system, a Secure Authenticated Channel (SAC) can be negotiated by the utility meter and the data concentrator to establish a longer term shared session key Ks. This session key Ks can then be used similarly to the former payload key Kp but repeatedly, for a certain period of time, to enforce communication message integrity and confidentiality in the point-to-point transmission between the utility meter and the data concentrator.

A malicious end user may try to hack the smart meter private key by various types of local attacks in order to steal it and use it to generate false messages, such as lower utility consumption reporting. A known solution to detecting electricity theft in that case consists in measuring the overall utility consumption at the data concentrator level and compare it with the sum of the reported utility consumption measurements from the connected utility meters. This solution works for fixed star-shaped grid network topologies in which utility meters always directly report to the same data concentrator, but not in the case of the proposed dynamically reconfigurable mesh-based grid network topology as the utility delivery path may be different from the utility consumption reporting path. In order to address this problem, each utility meter registers to a preferred data concentrator, for instance C2 for utility meter U3, and this preferred data concentrator is in charge with controlling and processing the utility meter consumption over time.

To this end, the utility meter U3 transmits its network identifier to the data concentrator C2, and the data concentrator C2 sends back a registration acknowledgement message to the utility meter U3. The utility meter U3 receives the registration acknowledgement message and records the network identifier of data concentrator C2 as its preferred data concentrator identifier.

The utility meter U3 may then optionally send back a recording acknowledgement message to the data concentrator C2.

The network identifier in this description may be a name, a network address, an index value, or any combination thereof.

Various registration methods are possible and will now be described in more detail.

In a first embodiment, the utility meter is manually configured to register to a local concentrator. The network identifier of the local concentrator is entered by the utility meter user at installation time or anytime it needs to be updated. The network identifier may be communicated to the user by the utility provider prior to the installation or update time using any conventional user communication means such as, but not limited to, a letter, a SMS, a phone call, an email, a web page, or any combination thereof.

In a second embodiment, the utility meter is remotely configured to connect to a local concentrator at installation time or anytime it needs to be updated. The network provider broadcasts a table of available data concentrators over the smart grid network, the utility meter discovers it by scanning the smart grid network and selects one of the available data concentrators.

In a third embodiment, the utility meter is automatically configured to connect to a local concentrator at installation time or anytime it needs to be updated. The data concentrator broadcasts its network identifier over the smart grid network, the utility meter discovers it by scanning the smart grid network and selects it accordingly.

Once it has registered to a preferred data concentrator, during its operation, utility meter U3 repeatedly transmits its utility consumption measurement and its preferred data concentrator identifier into a utility reporting message or communication data at regular intervals, for instance every 15 minutes. In normal operation over a reliable network transmission, the data concentrator C2 then sends an acknowledgement message back to the utility meter U3.

However, local network conditions or data concentrator overload may prevent from time to time the preferred data concentrator C2 to receive the utility reporting message at the time it is transmitted.

When a utility meter U3 detects it does not receive the receipt acknowledge message from its preferred data concentrator C2, it searches for an alternate proxy data concentrator C3 to transmit its reporting message (i.e. communication data).

The alternate proxy data concentrator C3 may be identified from a manual configuration of the utility meter, from a list of available data concentrators remotely sent by the utility provider, or from local network discovery. Once the proxy data concentrator C3 is identified, utility meter U3 transmits its reporting message to it. If no alternate proxy data concentrator is available, then the utility meter temporarily stores this reporting message in view to try again to transmit it later, preferably to the preferred data concentrator C2 and then to the alternate proxy data concentrator in case of unsuccessful. The data included in the reporting message can be transmitted in one or more messages.

In another mode of implementation, the utility meter broadcasts its utility communication data onto the local network so that connected data concentrators can discover and recognize it before initiating the connection in view to forward these data to the preferred data concentrator.

To this end, the proxy data concentrator C3 extracts the preferred data concentrator network identifier from the received communication data, compares it with its own network identifier, and detects it is not the preferred data concentrator C2.

As data concentrators are interconnected by various Lcp routes over the smart grid network, the proxy data concentrator C3 can reach the preferred data concentrator C2 through the grid and re-route the utility meter U3 communication messages to/from the preferred data concentrator C2 accordingly.

If the data concentrator C2 can be reached by the proxy data concentrator C3, the proxy data concentrator C3 transmits the utility reporting message from utility meter U3 to the data concentrator C2. Data concentrator C2 sends a receipt acknowledge to data concentrator C3 and data concentrator C3 sends a forward acknowledge message to the utility meter U3.

If the data concentrator C2 cannot be reached by the proxy data concentrator C3, the data concentrator C3 can store the utility reporting message for a certain period of time and try to send it back when this period of time is expired. This operation may be repeated several times until the period exceeds a certain grace period or the required storage exceeds the available buffering capability of data concentrator C3. When any of the latter events occurs, data concentrator C3 sends an alarm message to the utility providers it is connected to, and sends an alarm acknowledge message to the utility meter.

A key feature of any smart grid topology is its ability to support secure communication protocols in order to protect the utility meter reporting data against falsification and confidentiality breach threats. The proposed system and method can be adapted to support such protocols as will now be described in further detail.

In any topology, the data concentrator C2 establishes a secure communication channel with each utility provider management center. It verifies the integrity of the messages it receives, both upstream from the utility meter and downstream from the utility provider. Data confidentiality is enforced by encrypting the message. Data integrity is enforced by signing the message. This is particular important to make sure the utility metering measurement reporting messages have not been modified by a malicious user, for instance to decrease the actual utility consumption value so that the final invoice is lowered. Data integrity check is also useful to authenticate to source of maintenance firmware upgrade messages. Data confidentiality is also enforced on the communication links Luc between the utility meter U1, U2, U3 and the data concentrator C2 to warrant user data privacy as those networks may be easily spied in the meter neighborhood, in particular the wireless ones. Data integrity and confidentiality enforcement is also required for certain security management messages such as smart meter security keys or firmware upgrade over the smart grid network ("over-the-grid update").

The latter security architecture is more particularly suited for a static star-shaped grid network, where it is possible to associate a utility meter U1, U2, U3 respectively to a data concentrator C2 so that the utility meter U1, U2, U3 only needs securely communicate with C2 by establishing a dedicated payload key Kp or Secure Authenticated Channel session key Ks with the data concentrator C2. In this architecture, the utility meter primarily communicates with the data concentrator and does not need to manage security communications with the remote utility provider management centers. Resulting messages that are transmitted between each meter and a data concentrator are specific to their point-to-point transmission due to the encryption and signature and cannot be directly routed elsewhere. Thus, one drawback of this design is that the data concentrator C2 needs to verify and/or decrypt any secure message it receives and to sign and/or encrypt any secure message it sends with the relevant session or payload key, even if it does not need to access or process the message payload. This is not optimal in our proposed system configuration as it requires the roaming utility meter U3 to manage public key certificates and possibly Secure Authenticated Channels with several concentrators, which makes its design more complex and increases its cost. In particular it is not compatible with the broadcast mode of the utility reporting message transmission. In the special case of a neighboring utility meter U2 acting as a proxy, it further puts costly constraints on its processing power and tamper resistance design. There is therefore a need for a robust messaging solution that is agnostic to the intermediate concentrator route while still ensuring end-to-end integrity and confidentiality of the data communications between utility meters and utility providers.

This problem is addressed by a system and method comprising a utility meter, identified by a utility meter identifier Uid, which is at least adapted firstly to produce communication data (e.g. a utility reporting message) for a preferred data concentrator identified by a data concentrator identifier DCidpref and secondly to send these communication data. The method can be divided into several phases, in particular an initialization phase and an operating phase.

The initialization phase comprising the steps of:
● Registering the utility meter to the preferred data concentrator after having establish a connection between the utility meter and the preferred data concentrator;
● Acquiring the public key certificate from said preferred data concentrator;
● Verifying said public key certificate authenticity; if the public key certificate is not authentic then a warning step can be carried out;
● Extracting the preferred data concentrator public key KpubPDC from said public key certificate;
● Establishing a random session key Ks;
● Encrypting said random session key Ks with the preferred data concentrator public key KpubPDC into a key message MessKey;
   Then, the operating phase comprising the steps of:
   ● **Generating a payload message MessPayload comprising at least metering data measurement DTup metered by the utility meter;**
● Transmitting these communication data, which comprise the utility meter identifier Uid, the preferred data concentrator identifier DCidpref, the key message MessKey and the payload message MessPayload, at least to the preferred data concentrator.
● In case of completely successful transmission: receiving a transmitting acknowledgement message sent by the preferred data concentrator to the utility meter. If no transmitting acknowledgement message has been received within a predetermined time period from the transmitting step, then a disruption procedure can be carried out.

Preferably, the payload message MessPayload is signed before it is transmitted to the preferred data concentrator. According to another embodiment, this payload message MessaPayload can be encrypted by the random session key Ks before the transmission of this payload message to the preferred data concentrator. Such an encrypted payload message can be named as MessPayloadKs and can be also signed at a signature step.

According to one embodiment, the communication data can further comprise the identifier of the management provider P1-P3 to which the metering data measurement DTup refers and for instance has to be finally sent. Alternately, appropriate data, resulting from the communication data received by the data concentrator, can be sent by the latter to the proper management provider without any provider identifier mentioned in these communication data. In this case, the managing of the communication data received from the utility meters can be handled by the preferred data concentrator, for instance by means of a table indicating to which management provider each utility meter related to this preferred data concentrator is assigned.

The registering step will be preferably achieved by acquiring and storing the identifier DCidpref of the preferred data concentrator into the utility meter, then by transmitting the utility meter identifier Uid to the preferred data concentrator and by receiving a registering acknowledgement message from the latter. Acquiring the identifier DCidpref can be carried out in accordance with the three registration methods already disclosed above.

According to one embodiment, the disruption procedure comprises the step of returning to the initialization phase while substituting the preferred data concentrator with an alternate data concentrator during the processing of this step. If no alternate data concentrator is available, then a possible solution is to proceed again, later, with the transmitting step, by attempting to restore the communication either with the preferred data concentrator, or with the same or any other alternate data concentrator. According to an alternate solution, it should be possible to establish a communication with a utility meter if the latter is provided with all the necessary means to act as an alternate data concentrator. Alternately, a relatively close available utility meter (i.e. a utility meter located within the same neighborhood) could be used as a basic relay station for receiving the data communication and forwarding them to a data concentrator C1, C2, C3. To this end, such a utility meter will be able to receive said communication data, to extract the preferred data concentrator identifier DCidpref from this communication data and to forward them preferably to the data concentrator corresponding to the extracted identifier DCidepref. Another solution is to broadcast the communication data onto the network for any available data concentrator able to recognize the broadcasted data as described hereafter. In this case, the extracting step of the identifier DCidpref would not be necessary.

According to the preferred embodiment, the intermediate data concentrator C1, C2, C3 are at least partially interconnected between them, as shown in Fig. 2. Owing to such an interconnection, the transmitting step of the operation phase can be carried out by broadcasting the communication data onto the network for any available data concentrator C1, C2, C3. As the latter are able to recognize the broadcasted data as being utility communication data, any data concentrator is therefore able to extract the identifier DCidpref from these data in order to compare it with its own identifier and, if necessary, to forward these data to the corresponding data concentrator.

The warning step mentioned with respected to the initialization phase could be defined by transmitting to one available data concentrator (or to one utility meter acting as data concentrator) at least a warning information together with the identifier of the data concentrator from which the acquired public key certificate has been identifier as being not authentic. For instance, the transmitting operation achieved within this warning step can be carried out by broadcasting all the necessary data to the data concentrators in the neighborhood, in view that the broadcasted data are uploaded towards at least one utility management center P1, P2, P3, which will finally take appropriate measures.

The operating phase can be repeated periodically as the keys are available, in particular the session Key Ks.

In the present description, the wording "available" used to qualify data concentrators or utility meters should be understood as defining these devices as being connected to the network and equipped with appropriate means for processing the operations related thereto.

The present invention also refers to a system able to implement the above disclosed method. To this end, it suggests a system to report and monitor utility consumptions within a communication network comprising a plurality of utility meters U1-U8 connected to at least one utility management center P1-P3 through at least one intermediate data concentrator C1-C4 identified as being a preferred data concentrator by an identifier DCidpref.

Each utility meters U1-U8 being identified by a utility meter identifier Uid and comprises:
- connecting means for establishing a communication with at least one data concentrator C1-C4 through a communication network link Luc,
- acquiring means for obtaining said preferred data concentrator identifier DCidpref and for acquiring a public key certificate from said preferred data concentrator,
- processing means for verifying the authenticity of said public key certificate and extracting a preferred data concentrator public key KpubPDC from said public key certificate if the latter is authenticate,
- key generating means for producing a random session key Ks,
- encryption means for encrypting said random session key Ks with the preferred data concentrator public key KpubPDC into a key message MessKey,
- receiving means for receiving an acknowledgement message sent by the preferred data concentrator in case of completely successful transmission,
- means for generating communication data belonging at least to said utility meter and to one of said data concentrators C1-C4,
- sending means for transmitting the utility meter identifier Uid and communication data to the preferred data concentrator,
- a storing means for memorizing at least said communication data, said public key KpubPDC and said session key Ks,
- a central processing unit for managing all of the aforementioned means.

The communication data are the same as those mentioned in connection with the corresponding method.

This system may further comprises message generating means for reporting at least metering data measurement DTup metered by the utility meter U1-U8. It can further comprise encryption means for encrypting the payload message MessPayload by the random session key Ks into an encrypted payload message MessPayloadKs. The payload message MessPayload or MessPayloadKs can be also signed by appropriate means for signing messages.

The connecting means can comprise input/output interface for receiving/sending data according to at least a predetermined data exchange protocol used within the communication network.

Alternately, connecting means are further equipped with means for establishing a communication with at least another relatively close available utility meter U1-U8 used as a relay station for receiving communication data and forwarding them to a data concentrator C1-C4.

Preferably, the intermediate data concentrators C1-C4 are at least partially interconnected between them and the above-mentioned sending means are broadcast means for broadcasting the communication data to the data concentrators, in particular at least to the data concentrators located in the vicinity. Typically, broadcasting can be carried out by means of a ZigBee network, a Wi-Fi network, 2G/3G mobile phone network or any other wireless technology.

The present invention also refers to the use of the above-mentioned method for detecting electricity theft. That can be performed, at the level of a data concentrator C1-C4, by measuring the overall utility consumption (i.e. the entire energy supplied to the end users) and by comparing it with the sum of reported utility consumption measurements DTup from all utility meters (of said end users) registered to this data concentrator. Such a comparison takes into account some energy losses resulting from the ordinary efficiency of the supplying system. As, each communication data sent by each utility meter comprises both the utility consumption measurement DTup and the preferred data concentrator identifier DCidpref to which the utility meter is registered, therefore the reported utility consumption measurement DTup of any utility meter will always be sent to the proper data concentrator, either directly or indirectly if the communication data are re-routed and forwarded by an alternate data concentrator or by an alternate utility meter.

For the same purpose, the system of the present invention can also be used for detecting electricity theft by means of the same process as that mentioned above.

## Claims

1. Method to report and monitor utility consumptions within a communication network comprising a plurality of utility meters (U1-U8) connected to at least one utility management center (P1-P3) through at least one intermediate data concentrator (C1-C4), each utility meters being identified by a utility meter identifier Uid and being adapted firstly to produce communication data intended to a preferred data concentrator (C1-C4) identified by a data concentrator identifier DCidpref and secondly to send these communication data, said method comprising the following steps:
within an initialization phase:
- registering said utility meter (U1-U8) to said preferred data concentrator,
- acquiring a public key certificate from said preferred data concentrator and verifying if said public key certificate is authentic,
- if the public key certificate is not authentic then carrying out a warning step, otherwise extracting a preferred data concentrator public key KpubPDC from said public key certificate,
- establishing a random session key Ks,
- encrypting said random session key Ks with the preferred data concentrator public key KpubPDC into a key message MessKey,
within an operating phase:
- generating a payload message MessPayload comprising at least metering data measurement DTup metered by the utility meter (U1-U8);
- transmitting communication data, comprising the utility meter identifier Uid, the preferred data concentrator identifier DCidpref, the key message MessKey and the payload message MessPayload, at least to said preferred data concentrator,
- receiving a transmitting acknowledgement message sent by the preferred data concentrator (C1-C4) to the utility meter (U1-U8) in case of completely successful transmission,
- if no transmitting acknowledgement message has been received within a predetermined time period from the transmitting step, then carrying out a disruption procedure.

2. Method of claim 1, wherein the registering step is achieved by acquiring and storing the identifier DCidpref of the preferred data concentrator (C1-C4) into the utility meter, then by transmitting the utility meter identifier Uid to the preferred data concentrator and by receiving a registering acknowledgement message from the latter.

3. Method of claim 2, wherein acquiring and storing of the identifier DCidpref of the preferred data concentrator (C1-C4) is carried out by manually entering this identifier DCidpref into the utility meter.

4. Method of claim 2, wherein acquiring and storing of the identifier DCidpref of the preferred data concentrator (C1-C4) is carried out by remotely entering the identifier DCidpref of the preferred data concentrator into the utility meter after the latter has scanned the network and selected said preferred data concentrator from available data concentrators (C1-C4).

5. Method of claim 2, wherein acquiring and storing of the identifier DCidpref of the preferred data concentrator (C1-C4) is carried out by automatically scanning the network in order to select the identifier DCidpref of the preferred data concentrator broadcasted by the latter over said network.

6. Method of any of preceding claims, wherein said disruption procedure comprises the step of going back to the initialization phase while substituting said preferred data concentrator with an alternate data concentrator, if no alternate data concentrator is available, then proceeding again later with said transmitting step.

7. Method of any of preceding claims, wherein said disruption procedure comprises the step of transmitting to a near available utility meter (U1-U8) able to receive said communication data, then to extract the preferred data concentrator identifier DCidpref from said communication data before to transmit these communication data to the data concentrator (C1-C4) corresponding to the extracted identifier DCidpref.

8. Method of any of claims 1 to 6, wherein said disruption procedure comprises the step of going back to the initialization phase while substituting said preferred data concentrator with a near available utility meter (U1-U8) able to act as an alternate data concentrator.

9. Method of any of preceding claims, wherein said intermediate data concentrator (C1-C4) are at least partially interconnected between them and the transmitting step of the operating phase is carried out by the following steps:
- broadcasting said communication data onto said network for any available data concentrator (C1-C4) able to recognize these broadcasted data,
- extracting the preferred data concentrator identifier DCidpref from said communication data,
- comparing the extracted identifier DCidpref with the identifier of said available data concentrator (C1-C4),
- if the two compared identifiers are not the same, then forwarding the communication data to the data concentrator (C1-C4) corresponding to the extracted identifier DCidpref.

10. Method of any of preceding claims, wherein said payload message MessPayload is signed before it is transmitted to said preferred data concentrator.

11. Method of any of preceding claims, wherein said payload message MessPayload is encrypted by said random session key Ks before that payload message is transmitted to said preferred data concentrator.

12. Use of the method according to claims 1 to 11, for detecting electricity theft by measuring the overall utility consumption at the level of a data concentrator (C1-C4) and comparing it with the sum of reported utility consumption measurements DTup from all utility meters (U1-U8) registered to said data concentrator (C1-C4).

13. System to report and monitor utility consumptions within a communication network comprising a plurality of utility meters (U1-U8) connected to at least one utility management center (P1-P3) through at least one intermediate data concentrator (C1-C4) identified as being a preferred data concentrator by an identifier DCidpref, each utility meters (U1-U8) being identified by a utility meter identifier Uid and comprising:
- connecting means for establishing a communication with at least one data concentrator (C1-C4) through a communication network link Luc,
- acquiring means for obtaining said preferred data concentrator identifier DCidpref and for acquiring a public key certificate from said preferred data concentrator,
- processing means for verifying the authenticity of said public key certificate and extracting a preferred data concentrator public key KpubPDC from said public key certificate if the latter is authenticate,
- key generating means for producing a random session key Ks,
- encryption means for encrypting said random session key Ks with the preferred data concentrator public key KpubPDC into a key message MessKey,
- encryption means for encrypting a payload message MessPayload by said random session key Ks into an encrypted payload message MessPayloadKs; said payload message including at least metering data measurement DTup metered by the utility meter (U1-U8),
- receiving means for receiving an acknowledgement message sent by the preferred data concentrator in case of completely successful transmission,
- means for generating communication data including said preferred data concentrator identifier DCidpref, said utility meter identifier Uid, said key message MessKey and said encrypted a payload message MessPayloadKs,
- sending means for transmitting the utility meter identifier Uid and communication data to the preferred data concentrator,
- a storing means for memorizing at least said communication data, said public key KpubPDC and said session key Ks,
- a central processing unit for managing all of said means.

14. System of claim 13, wherein connecting means are equipped with means for further establishing a communication with at least another close available utility meter (U1-U8) used as a relay station for receiving communication data and forwarding them to a data concentrator (C1-C4).

15. Use of the system according to claim 13 or 14, for detecting electricity theft by measuring the overall utility consumption at the level of a data concentrator (C1-C4) and comparing it with the sum of reported utility consumption measurements DTup from all utility meters (U1-U8) registered to said data concentrator (C1-C4).
